# EUROPEAN PATENT APPLICATION

(11) **EP 4 654 457 A1**
(43) Date of publication of application: **26.11.2025**
(21) Application number: 25177732.2
(22) Date of filing: 20.05.2025
(51) Int. Cl.: H02P 5/74, H02P 3/22, H02P 25/16, B23Q 5/10, H02P 29/024

(54) **A DEVICE FOR MANAGING A BRAKING ELECTRICAL ENERGY**

(30) Priority: 20.05.2024 IT 202400011377
(71) Applicant: Hiteco S.r.l., 47921 Rimini (RN) (IT)
(72) Inventor: FABBRI, Filippo, 47921 Rimini (RN) (IT)
(74) Representative: Gallo, Gianluca

(57) **Abstract**

Described is a device (1) for managing a braking electrical energy generated by at least one drive of a plurality of drives (2, 3), each drive comprising an electric motor (21, 31) and a Direct Current bus (DC) (221, 321), the device (1) comprising a plurality of primary connectors (11), each primary connector (11) being configured to be electrically connected to the DC bus (221, 321) of a respective drive of the plurality of drives (2, 3), in such a way as to exchange electrical energy with the plurality of drives (2, 3); a secondary connector (12), configured to be electrically connected to a braking resistor (14), the braking resistor (14) being configured to dissipate the braking electrical energy; a tertiary connector (13), configured to be electrically connected to a battery (15), the battery (15) being configured to store the braking electrical energy; and a control unit (10), electrically connected to the plurality of primary connectors (11), to the secondary connector (12) and to the tertiary connector (13), the control unit (10) being configured to divide, when in use, the braking electrical energy absorbed by at least one drive of the plurality of drives (2, 3), between the braking resistor (14) and the battery (15), and for dispensing, when in use, the braking electrical energy accumulated in the battery (15) to at least one drive of the plurality of drives (2, 3). This invention relates to a machine tool for machining a workpiece.

## Description

This invention relates to a device for managing a braking electrical energy. In particular, the invention relates to a device for managing the braking electrical energy generated by at least one drive of a plurality of drives. This invention also relates to a machine tool for machining a workpiece. The term "machining a workpiece" means, for example, both the machining for removal of chippings and the generation by means of additive manufacturing or 3D printing. More specifically, the machine tool according to the invention comprises a plurality of drives configured for generating braking electrical energy during a step of machining the workpiece, and a device electrically connected to the plurality of drives for managing the braking electrical energy generated by the plurality of drives. In the field of machining a workpiece, there are prior art machine tools comprising a plurality of drives. The term "drive" typically means the assembly of an actuator and a controller (*controller* or *driver*) configured to control the actuator itself, for example, in terms of power or torque, position, speed and/or acceleration. Typically, the actuator is an electric motor and the controller is an electronic controller. The electronic controller schematically comprises an Alternating Current (AC) power supply input, an Alternating Current (AC) to Direct Current (DC) converter, a DC bus, a DC/AC converter and an AC output for powering the electric motor with an alternating voltage, typically variable in frequency. In particular, where the drive is used for moving and positioning mobile parts of the machine tool, the use of synchronous electric motors is preferable. On the other hand, if the drive is used for rotating a tool for machining the workpiece, the use of asynchronous electric motors is preferable. In this case, the electronic controller is typically called an "inverter".

When the electric motor (asynchronous or synchronous) of a drive is braked, it acts like a current generator. For this reason, there is a reversal of the flow of the electrical power, which changes from absorbed to generated. The electrical power generated flows towards the DC bus of the electronic controller. Typically, so-called braking resistors are used for dissipating the electrical power, that is to say, the electricity generated by the electric motor during the braking phase. In the absence of these braking resistors, the electrical power generated could damage the electronic controller. The braking resistance substantially transforms the electrical energy generated into heat.

However, it is evident that such dissipation is a waste in terms of energy. In effect, the electricity absorbed by the drive is converted into kinetic and/or potential energy, which is then converted into heat (a form of energy which is not reusable by the machine tool) during the braking phases.

There are prior art machine tools for systems for storing and re-using electrical energy generated by the drives during the braking phases. For example, patent document EP2524757 shows a machine tool, in particular a panel saw machine for machining wooden panels. The panel saw machine comprises two drives. Each drive comprises an electric motor, a DC bus and an electronic controller which controls the flows of electric power of the drive. Moreover, each drive comprises recovery means, in particular a capacitor battery, for storing the braking energy generated by the respective electric motor in the braking phase and a braking resistor. The recovery means and the braking resistor are electrically connected to the DC bus of the respective drive.

However, this solution has the drawback that each drive must comprise a relative dedicated battery. This obviously results in an increase in the production costs of the solution.

Moreover, the braking energy generated by an electric motor of a specific drive cannot be used to power another electric motor of another drive. If the electric motor associated with the battery which has stored the braking electrical energy does not require, in predetermined times, an electricity supply, the energy stored in the battery must in any case be dissipated in the form of heat, for safety reasons, and is therefore not re-used.

Moreover, the solution proposed here is incorporated inside each drive and cannot therefore be applied on machine tools comprising drives which do not provide for the use of this solution inside them.

The aim of this invention is to provide a device for managing a braking electrical energy, and a machine tool for machining a workpiece, which overcome the above-mentioned drawbacks of the prior art.

In particular, the aim of this invention is to provide a device for managing a braking electrical energy which allows the braking energy of an electric motor to be re-used in an efficient and flexible manner for powering a plurality of drives.

Moreover, the aim of this invention is to provide a device for managing a braking electrical energy which is independent of the type of electrical drives used inside the machine tool.

Said aim is fully achieved by the guide system and by the edging machine as characterised in the appended claims.

The invention provides a device for managing a braking electrical energy generated by at least one drive of a plurality of drives. In particular, each drive comprises an electric motor and a Direct Current (DC) bus. Advantageously, the device comprises a plurality of primary connectors.

In this description, the term "connector" is used to mean a single connector, a pair of connectors, a set of three connectors, etc., depending on whether it is a unipolar, bipolar, tripolar electrical circuit etc.

Each primary connector (or pair of primary connectors) may be configured for being electrically connected to the DC bus of a respective drive of the plurality of drives, in such a way as to exchange electricity with the plurality of drives. In this case, as explained above, since the DC bus is a bipolar electric circuit, having a positive pole and a negative pole, it should be understood that reference is being mad to a pair of primary connectors. Moreover, the device may comprise a secondary connector. The secondary connector may be configured to be electrically connected to a braking resistor. Also in this case, since the braking resistor is an element having two poles, the secondary connector is understood to be a pair of connectors configured for being electrically connected to the two poles of the braking resistor. The braking resistor may be configured for dissipating, completely or partly, the braking electrical energy generated by at least one electric motor. It should be understood that the device may comprise one or more secondary connectors (or pairs of secondary connectors) to which to connect respective braking resistors. Moreover, more than one braking resistor can be connected to a single secondary connector (or pair of secondary connectors), for example, to reach the desired braking resistance value.

Further, the device may comprise a tertiary connector, configured to be electrically connected to a battery or, more generally speaking, to recovery or storage means. In this case, too, since the battery is an element with two poles, a positive pole and a negative pole, the tertiary connector is understood to be a pair of connectors configured to be electrically connected to the two poles of the battery. The battery may be configured for storing the braking electrical energy generated by at least one electric motor. It should be understood that the device may comprise one or more tertiary connectors (or pairs of tertiary connectors) to which to connect respective batteries. Moreover, several batteries can be connected to a single tertiary connector (or pair of tertiary connectors), for example, to reach the desired storage capacity. The battery may be of any type, such as, for example, capacitive (that is to say, made using one or more capacitors) or lithium, in order to obtain, for example, the desired storage capacity, the storage functions, and recharging/discharging times and curves.

Moreover, the device may comprise a control unit. The control unit may be electrically connected to the plurality of primary connectors, to the secondary connector and to the tertiary connector. The control unit may be configured to divide, when in use, the braking electrical energy absorbed by at least one drive of the plurality of drives. In particular, the control unit can divide the braking electrical energy between the braking resistor and the battery. Further, the control unit may be configured to dispense, when in use, the braking electrical energy accumulated in the battery to at least one drive of the plurality of drives. In this way, the braking electrical energy generated by a predetermined motor can be stored in the battery and then re-used to power another motor of another drive as needed, making the re-use of the braking energy more efficient and flexible. The control unit can decide how to divide the braking electrical energy between the battery and the braking resistor according to predetermined logics. These logics may take into account the recharging/discharging curves of the battery, the life status of the battery, the state of charge of the battery and other factors relating to the operation of the drives, the device itself, the battery and/or the braking resistance.

Advantageously, the device may comprise a casing configured to contain the tertiary connector, the battery and the control unit, in such a way as to isolate them from an outside environment. The device is, therefore, outside and independent of the drives present, for example, in a machine tool, having a casing which defines the perimeter. In this way, the device may also be used on machine tools already manufactured, which comprise electrical drives, for example, of different brands and/or models. Moreover, the purpose of the casing is to protect, in particular, the control unit and the battery from external agents. For this reason, the casing may have different degrees of insulation depending on the type of environment in which the device may be used. It should be noted that the device could, on the other hand, comprise a battery outside the casing, in such a way as to connect, using the tertiary connector, different types of battery. Different batteries can in this way be used, in terms of model, type or size, to adapt the device to different cases of use, thus making it more flexible.

More advantageously, the casing may have an electrical interface accessible from the outside environment. The electrical interface may comprise the plurality of primary connectors and the secondary connector.

This has the advantage of making the installation of the device inside a machine tool quicker.

Also, advantageously, the device may comprise sensor means for measuring quantities relative to the operation of the plurality of drives. Moreover, the sensor means can measure quantities relative to the operation of the device. In particular, the sensor means can measure quantities relative to the operation of the battery. The sensor means can also measure quantities relative to the operation of the braking resistor. These quantities may be, for example, a time, a temperature, a humidity level and/or electrical quantities such as, for example, a current, a voltage, a frequency, a phase displacement and/or a power.

The device may also comprise a memory for storing data. The data may comprise the quantities measured and configuration parameters of the device. The configuration parameters of the device may be, for example, a software version, one or more operating and/or alarm thresholds, charging/discharging curves, for example, of one or more batteries, logics for dividing the braking electrical energy between the braking resistor and the battery, communication parameters (protocols, physical and/or logic addresses, passwords, operator identifier, etc.).

Advantageously, the control unit may be connected to the sensor means and to the memory.

More advantageously, the control unit may be configured to determine operating data of the plurality of drives. For example, the control unit may determine whether a drive of the plurality of drives is switched on or off, whether a drive is operating as a motor or as a generator, if an actuator is braking, how much electrical energy has been absorbed by a drive during a predetermined period of time, how much electricity has been generated by a drive during a predetermined period of time, and/or whether a drive is in an anomalous operating state, for example, as a function of the thresholds. The control unit may also be configured to determine operating data of the device. For example, the control unit can determine how much braking electrical energy has received from the plurality of drives during a predetermined period of time, how much braking electrical energy has been dispensed to the plurality of drives, how much braking electrical energy has been accumulated in the battery during a predetermined period of time, how much braking electrical energy has been dissipated by means of the braking resistor during a predetermined period of time, an optimum logic/function of dividing the braking electrical energy between the battery and the braking resistor, and whether the device is in an anomalous operating state, for example, as a function of the thresholds. The control unit may also be configured to determine operating data of the battery. For example, the control unit can determine how much braking electrical energy has been accumulated in the battery during a predetermined period of time, a residual life of the battery, a maximum level of battery recharging, a level of deterioration of the battery recharging/discharging capacity, an optimum battery recharging/discharging curve, and whether the battery is in an anomalous operating state, for example, as a function of the thresholds. In particular, the control unit may be configured to determine operating data of the braking resistor. For example, the control unit can determine how much braking electrical energy has been dissipated by means of the braking resistor during a predetermined period of time, a residual life of the braking resistor, a maximum level of dissipation by means of the braking resistor, a level of deterioration of the dissipation capacity of the braking resistor, an optimum dissipation curve of the braking resistor, and whether the braking resistor is in an anomalous operating state, for example, as a function of the thresholds. The operating data may be determined on the basis of the quantities measured. The data stored in the memory may comprise the predetermined operating data.

Advantageously, the device may comprise a communication interface. in particular the communication interface may be a wireless interface. The communication interface may be configured to exchange data with a remote device accessible by an operator. In particular, the data exchanged comprise at least a part of the data stored in the memory, in such a way as to make the data stored in the memory (or a part of the data) accessible to the operator.

More advantageously, the device may comprise a remote device accessible by an operator such as, for example, a server, a PC, a smartphone, a wearable device or a tablet. In particular, the remote device may be a mobile device such as, for example, a smartphone, a wearable device or a tablet. The remote device may be connected to the communication interface, preferably by means of a wireless connection. Further, the remote device may have a relative graphical user interface. The graphical user interface may be visible to the operator, for example, by means of a monitor, in particular a touchscreen. The operator can display information using the graphical user interface, and can also enter data, in particular using a keyboard or by means of the touchscreen monitor. The graphical user interface may be configured to display at least a part of the data stored in the memory, in such a way as to make the data stored in the memory visible to the operator. The remote device can download only a part of the data stored in the memory, as a function of a user selection, in such a way as to reduce the band consumption, or it can download all the data stored in the memory and display only the data of interest to the operator.

Advantageously, the graphical user interface may be configured to receive input data from the operator. The input data may be subsequently sent, that is, exchanged, to the communication interface by, for example, a wireless communication. The data exchanged between the remote device and the device can be stored in the memory of the device itself. In this way, the operator can change the data inside the device and, in particular, inside the memory. For example, the operator can thus set up the configuration parameters of the device. In effect, the input data may comprise at least one parameter of the configuration parameters of the device.

More advantageously, the control unit may be configured to determine a fault status as a function of the operating data of the plurality of spindles and/or of the device and/or of the battery and/or of the braking resistor. After detecting the fault state, the control device may be configured to send, through the communication interface, an alarm signal to the remote device, in such a way as to inform the operator. The alarm signal may be, for example, of the visual type (text, colour, etc.), acoustic, vibrational, optical or a set of these.

This invention provides a machine tool for machining a workpiece. The machine tool may comprise a plurality of drives and a device for controlling the braking electrical energy as described above.

In particular, each drive of the plurality of drives may comprises an electric motor and a Direct Current (DC) bus, and is configured to generate braking electrical energy during at least one step of machining the workpiece.

Further, the device may be electrically connected, using the plurality of primary connectors, to the DC buses of the plurality of drives, in such a way as to divide the braking electrical energy generated by at least one drive of the plurality of drives, between the braking resistor and the battery. Moreover, the device may be configured to dispense the braking electrical energy accumulated in the battery to at least one drive of the plurality of drives during a further step for machining the workpiece.

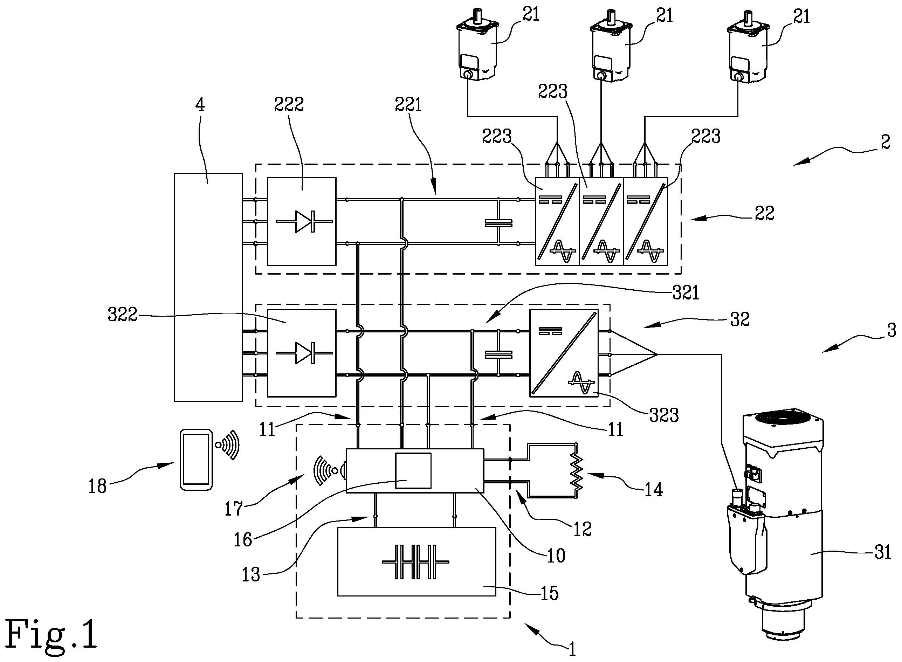

These and other features of the invention will become more apparent from the following detailed description of a preferred, non-limiting example embodiment of it, with reference to the accompanying drawings, in which: - Figure 1 shows a diagram of the device for managing a braking electrical energy according to the invention.

The directional terminology, such as "right", "left", "front", "rear", "base", "top", "upper", "lower", "side", etc., is used below with reference to the accompanying drawings. Since components and/or elements and/or embodiments of this invention may be positioned and/or made to operate in various different orientations, the directional terminology is used purely by way of a non-limiting example.

Figure 1 schematically shows a device 1 for managing a braking electrical energy according to the invention. In particular, the braking electrical energy is generated by a plurality of drives 2, 3.

According to the example shown schematically in Figure 1, there is a first drive 2 and a second drive 3.

The first drive 2 comprises a plurality of motors 21. In particular the motors 21 are synchronous brushless electric motors, typically used for moving mobile parts of a machine tool (not illustrated in the drawings).

The motors 21 are driven, that is, controlled, for example, in terms of position, speed, acceleration and/or torque, by a controller 22. According to other embodiments, there may be a controller 22 for each motor 21. The controller 22 is an electronic controller. The controller 22 comprises an Alternating Current (AC) power supply input. The power supply input is configured to be electrically connected to a power supply source 4, typically a three-phase alternating voltage source. The controller 22 also comprises a converter from Alternating Current (AC) to Direct Current (DC) 222. The AC/DC converter 222 is also called rectifier circuit, rectifier stage or rectifier bridge, and has the purpose of converting the three-phase alternating voltage present at the input into a direct current voltage. Moreover, the controller 22 comprises a DC bus 221, electrically connected to the AC/DC converter 222 and positioned downstream of this relative to the power supply source 4. The controller 22 also comprises a plurality of DC/AC converters 223, one for each motor 21 to be controlled. Each DC/AC converter 223 has the aim of converting the direct current voltage present on the DC bus 221, shared by all the DC/AC converters 223, into an alternating voltage, typically, variable in frequency, for powering the respective electric motor 21.

As shown in the example of Figure 1, the second drive 3 comprises a motor 31. In particular, the motor 31 is an asynchronous brushless electric motor, typically used for rotating a tool for machining a workpiece (not shown in the drawings). These motors are also called electro-spindles, motor-driven spindles or, simply, spindles.

The motor 31 is driven, that is, controlled, for example, in terms of position, speed, acceleration and/or torque, by a controller 32. The controller 32 is an electronic controller, typically called an inverter. The controller 32 comprises an Alternating Current (AC) power supply input. The power supply input is configured to be electrically connected to the power supply source 4. Again, the controller 32 comprises an AC/DC converter 322. Moreover, the controller 32 comprises a DC bus 321, electrically connected to the AC/DC converter 322 and positioned downstream of it relative to the power supply source 4. The controller 32 also comprises a DC/AC converter 323 having the purpose of converting the direct voltage present on the DC bus 321 into an alternating voltage, typically, variable in frequency, for powering the electric motor 31.

As shown in the example of Figure 1, the device 1 comprises a control unit 10.

Moreover, the device 1 comprises a plurality of primary connectors 11. In particular, the device 1 comprises a plurality of pairs of primary connectors 11, since the primary connectors 11 are configured to be connected to respective bipolar circuits, more in particular, to respective DC circuits each having a positive pole and a negative pole. In the following description, for brevity, reference will be made to pairs of primary connectors 11 as if they were individual connectors. In the example shown in Figure 1, the device 1 has two pairs of primary connectors 11. A pair of primary connectors 11 is electrically connected to the DC bus 221 of the first drive 2, whilst the other pair of primary connectors 11 is electrically connected to the DC bus 321 of the second drive 3, in such a way as to exchange electricity with the plurality of drives 2, 3.

The device 1 also comprises a secondary connector 12. In particular, the device 1 comprises a pair of secondary connectors 12, since the secondary connectors 12 are configured to be connected to a bipolar circuit. In the following description, for brevity, reference will be made to the pair of secondary connectors 12 as if they were an individual connector. In the example shown in Figure 1, the device 1 has a pair of secondary connectors 12 configured to be electrically connected to a braking resistance 14.

Moreover, the device 1 comprises a tertiary connector 13. in particular, the device 1 comprises a pair of tertiary connectors 13, since the tertiary connectors 13 are configured to be connected to a bipolar circuit. In the following description, for brevity, reference will be made to the pair of tertiary connectors 13 as if they were an individual connector. In the example shown in Figure 1, the device 1 has a pair of tertiary connectors 13 configured to be electrically connected to a battery 15.

The control unit 10 is electronically connected to the plurality of primary connectors 11, to the secondary connector 12 and to the tertiary connector 13. Further, the control unit 10 is configured to divide, when in use, the braking electrical energy absorbed by at least one drive of the plurality of drives 2, 3, between the braking resistor 14 and the battery 15, and for dispensing, when in use, the braking electrical energy stored in the battery 15 to at least one drive of the plurality of drives 2, 3.

Again with reference to the example shown in Figure 1, the device 1 may comprise the braking resistance 14. The braking resistor 14 is electrically connected to the control unit 10 by means of the secondary connector 12, and is configured for dissipating, in the form of heat, the braking electrical energy generated by at least one drive of the plurality of drives 2, 3. Again with reference to the example shown in Figure 1, the device 1 may comprise the battery 15. The battery 15 is electrically connected to the control unit 10 by means of the tertiary connector 13, and is configured for storing the braking electrical energy generated by at least one drive of the plurality of drives 2, 3.

The device 1 may comprise a casing (not shown in the drawings). The casing may contain the control unit 10, the tertiary connectors 13 and the battery 15, in such a way as to isolate them from an outside environment. The secondary connectors 12 and the plurality of primary connectors 11 can be positioned on the casing in such a way as to make an electrical interface, a so-called I/O interface. The electrical interface allows the device 1 to be connected to the plurality of drives 2, 3 and to the braking resistance 14. It is convenient that the braking resistance 14, as it is necessary to dissipate the braking electrical energy in the form of heat, is located outside the casing. However, since the battery 15 and the control unit 10 are delicate and sensitive components, it is convenient that they are protected from the outside environment by means of the casing, which may have various levels of insulation, depending on the type of outside environment in which the device 1 must operate.

Moreover, the device 1 may comprise sensor means (not shown in the drawings) for measuring quantities relative to the operation of the plurality of drives 2, 3 and/or to the operation of the device 1 and/or to the operation of the battery 15 and/or to the operation of the braking resistor 14. The sensor means are connected to the control unit 10, which may be configured for processing and/or conditioning the signals generated by the sensor means.

The device 1 may also comprise a memory 16, for storing data. The data comprising the quantities measured and configuration parameters of the device.

The control unit 10 may be connected to the memory 16 or it may comprise the memory 16. Further, the control unit may be configured to determine operating data of the plurality of drives 2, 3 and/or of the device 1 and/or of the battery 15 and/or of the braking resistor 14 on the basis of the quantities measured. The data stored in the memory 16 may comprise the predetermined operating data.

Again as shown in the example of Figure 1, the device 1 may comprise a communication interface 17. The communication interface 17 may preferably be a wireless interface. The communication interface 17 is configured to allow the exchange of data between the device 1 and a remote device 18. The data exchange between the device 1 and the remote device 18 may occur directly, for example by means of a point-point connection, and/or indirectly, by means of a communication network. The communication network may be a local network or an Internet network, to which the communication interface 17 accesses by Wi-Fi or by means of a mobile data service (GSM, 3G, 4G, 5G, etc.). The data exchanged may be the data stored in the memory 16. In particular, the data exchanged may be all or only a part of the data stored in the memory 16.

The device 1 may also comprise a remote device 18. The remote device 18 is a device accessible by an operator and may be a server, a PC, a tablet, a wearable device or a smartphone. The remote device 18 has a relative graphical user interface (not illustrated in the accompanying drawings). The operator can display, using the graphical user interface, the data exchanged between the device 1 and the remote device 18. The remote device 18 may comprise means for entering input data (not shown in the drawings) by the operator.

A brief description is given below of an example of how the device 1 operates.

During normal operation, the controller 22 of the first drive controls the plurality of motors 21 by means of a variable voltage generated by the DC/AC converters 223 starting from the direct voltage present on the DC bus 221. In turn, the direct current voltage present on the DC bus 221 is generated by the AC/DC converter 222 starting from the three-phase alternating voltage of the power supply source 4. When, however, one of the motors 21 is braked, it acts like a generator. For this reason, braking electrical energy flows from the motor 21 when braking to the DC bus 221 of the first drive 2. The braking electrical energy flows from the DC bus 221 to the device 1, by means of the electrical connection present between the DC bus 221 and a primary connector of the plurality of primary connectors 11. The control unit 10, as a function of a predetermined logic, which may be stored, for example, inside the memory 16 in the form of configuration parameters of the device 1, divides the braking electrical energy between the braking resistor 14 and the battery 15. For example, all the braking electrical energy may be directed towards the braking resistor 14, that is, towards the battery 15. According to another example, a part, or percentage, of the braking electrical energy may be directed towards the braking resistance 14, and the remaining part, or percentage, towards the battery 15. This choice, dictated by the predetermined logic, may be, for example, a function of the charging status, the residual life and/or the charging/discharging curves of the battery 15. The device 1 may also comprise a distribution logic which is variable over time, modified, for example, as a function of configuration parameters of the device 1, preset thresholds and/or an artificial intelligence algorithm. Once the braking electrical energy (entirely or partly) has been stored in the battery 15, the control unit 10 can dispense the braking electrical energy accumulated in the battery 15 for dispensing it, for example, to one or more of the motors 21 and/or to the motor 31 depending on their needs, or consumption, of electricity. In effect, the control unit 10 is electrically connected both to the DC bus 221 of the first drive 2 and to the DC bus 321 of the second drive 3 by means of the plurality of primary connectors 11. This allows the drawing and storing of braking electrical energy from a drive and it being possible to then re-use it on another drive, making the re-use of braking electrical energy more efficient and flexible.

In addition to the distribution, storage, dissipation and supply of the braking electrical energy, the device 1 may measure, using the sensor means, quantities relative to the operation of the plurality of drives 2, 3 and/or the operation of the device 1 and/or the operation of the battery 15 and/or the operation of the braking resistor 14. These quantities can be stored in the memory 16.

On the basis of the quantities measured, the control unit can determine operating data of the plurality of drives 2, 3 and/or of the device 1 and/or of the battery 15 and/or of the braking resistor 14 on the basis of the quantities measured. The predetermined operating data can also be stored in the memory 16.

Further, on the basis of the operating data, the control unit may determine the fault statuses for the plurality of drives 2, 3 and/or for the device 1 and/or for the braking resistor 14 and/or for the battery 15, and generate a relative alarm signal.

At least a part of the data stored in the memory 16 and/or the alarm signal can be sent to the remote device 18 using the communication interface 17. In this way, the operator can display on the graphical user interface the information of interest to him/her, and be sent alarms by means of acoustic, visual, tactile and/or vibrational signals, relating to the alarm signal, if there are faults in the operation of the plurality of drives 2, 3 and/or of the device 1 and/or of the braking resistor 14 and/or of the battery 15.

The operator can also modify the data present in the memory 16 by entering input data in the remote device 18, sending it to the device 1 using the communication interface 17 and storing it in the memory 16. The input data can preferably contain thresholds for generating alarms and/or the configuration parameters of the device 1 relating to, for example, the logics for dividing the braking electrical energy, a firmware and parameters relative to the sensor means.

The present invention is described by way of example only, without limiting the scope of application, according to its preferred embodiments, but it shall be understood that the invention may be modified and/or adapted by experts in the field without thereby departing from the scope of the inventive concept, as defined in the claims herein.

## Claims

1. A device (1) for managing a braking electrical energy generated by at least one drive of a plurality of drives (2, 3), each drive comprising an electric motor (21, 31) and a Direct Current (DC) bus (221, 321), the device (1) comprising:
- a plurality of primary connectors (11), each primary connector (11) being configured for being electrically connected to the DC bus (221, 321) of a respective drive of the plurality of drives (2, 3), in such a way as to exchange electricity with the plurality of drives (2, 3);
- a secondary connector (12), configured to be electrically connected to a braking resistor (14), the braking resistor (14) being configured for dissipating the braking electrical energy;
- a tertiary connector (13), configured to be electrically connected to a battery (15), the battery (15) being configured for storing the braking electrical energy; and
- a control unit (10), electrically connected to the plurality of primary connectors (11), to the secondary connector (12) and to the tertiary connector (13), the control unit (10) being configured for dividing, when in use, the braking electrical energy absorbed by at least one drive of the plurality of drive (2, 3), between the braking resistor (14) and the battery (15), and for dispensing, when in use, the braking electrical energy stored in the battery (15) to at least one drive of the plurality of drives (2, 3).

2. The device (1) according to claim 1, comprising a braking resistor (14) and a battery (15), wherein the braking resistor (14) is electrically connected to the control unit (10) by means of the secondary connector (12), and wherein the battery (15) is electrically connected to the control unit by means of the tertiary connector (13).

3. The device (1) according to claim 2, comprising a casing configured to contain the tertiary connector (13), the battery (15) and the control unit (10), in such a way as to isolate them from an outside environment.

4. The device (1) according to any one of the preceding claims, comprising:
- sensor means for measuring quantities relative to the operation of the plurality of drives (2, 3) and/or to the operation of the device (1) and/or to the operation of the battery (15) and/or to the operation of the braking resistor (14); and
- a memory (16), for storing data, the data stored comprising the quantities measured and configuration parameters of the device (1),
wherein the control unit (10) is connected to the sensor means and to the memory (16).

5. The device (1) according to claim 4, wherein the control unit (10) is configured to determine operating data of the plurality of drives (2, 3) and/or of the device (1) and/or of the battery (15) and/or of the braking resistor (14) on the basis of the quantities measured, wherein the data stored in the memory (16) comprise the predetermined operating data.

6. The device (1) according to claim 4 or 5, comprising a communication interface (17), in particular a wireless interface, for exchanging data with a remote device (18) accessible by an operator, wherein the data exchanged comprises at least a part of the data stored in the memory (16), in such a way as to make the data stored in the memory (16) accessible to the operator.

7. The device (1) according to claim 6, comprising a remote device (18) accessible by an operator, in particular a mobile device, connected to the communication interface (17), preferably by means of a wireless connection, and having a relative graphical user interface configured to display at least a part of the data stored in the memory (16), in such a way as to make the data stored in the memory visible to the operator.

8. The device (1) according to claim 7, wherein the graphical user interface is configured to receive input data from the operator, in such a way that the input data is exchanged with the communication interface (17) and stored in the memory (16), and wherein the input data comprises at least one parameter of the configuration parameters of the device (1).

9. The device (1) according to any one of claims 5 to 8, wherein the control unit (10) is configured to determine a fault status as a function of the operating data of the plurality of drives (2, 3) and/or of the device (1) and/or of the battery (15) and/or of the braking resistor (14), and to send, using the communication interface (17), an alarm signal to the remote device (18), so as to inform the operator when the fault status is determined.

10. A machine tool for machining a workpiece comprising:
- a plurality of drives (2, 3); and
- a device (1) according to any one of claims 1 to 9,
wherein each drive of the plurality of drives (2, 3) comprises an electric motor (21, 31) and a Direct Current (DC) bus (221, 321), and is configured to generate braking electrical energy during at least one step of machining the workpiece,
and wherein the device (1) is electrically connected, by means of the plurality of primary connectors (11), to the DC buses (221, 321) of the plurality of drives (2, 3), in such a way as to divide the braking electrical energy generated by at least one drive of the plurality of drives (2, 3), between the braking resistor (14) and the battery (15), and is configured for dispensing the braking electrical energy stored in the battery (15) to at least one drive of the plurality of drives (2, 3) during a further step of processing the workpiece.
